# FASCICULE DE BREVET EUROPEEN

(11) **EP 2 089 963 B1**
(45) Date de publication et mention de la délivrance du brevet: **09.02.2011**
(21) Numéro de dépôt: 07871808.7
(22) Date de dépôt: 07.12.2007
(51) Int. Cl.: H02P 29/02, H02M 7/5387

(54) **ALIMENTATION A DEUX ONDULEURS EN SERIE POUR ACTIONNEUR ELECTROMECANIQUE POLYPHASE**
STROMVERSORGUNG MIT ZWEI REIHENWECHSELRICHTERN FÜR EIN ELEKTROMECHANISCHES MEHRPHASENSTELLGLIED
POWER SUPPLY WITH TWO SERIES INVERTERS FOR A POLYPHASE ELECTROMECHANICAL ACTUATOR

(30) Priorité: 13.12.2006 FR 0610862
(43) Date de publication de la demande: 19.08.2009
(73) Titulaire: Messier-Dowty SA, 78140 Velizy Villacoublay (FR)
(72) Inventeur: MATT, Daniel, F-34170 Castelnau (FR); JAC, Julien, F-34070 Montpellier (FR); ZIEGLER, Nicolas, F-34070 Montpellier (FR)
(74) Mandataire: Parzy, Benjamin Alain
(86) Numéro de dépôt international: PCT/FR2007/002013
(87) Numéro de publication internationale: WO 2008/087270

(56) Documents cités:
- DE-A1- 4 439 932
- FR-A- 2 865 868
- WALLMARK O ET AL: "Post-Fault Operation of Fault-Tolerant Inverters for PMSM Drives" POWER ELECTRONICS AND APPLICATIONS, 2005 EUROPEAN CONFERENCE ON DRESDEN, GERMANY 11-14 SEPT. 2005, PISCATAWAY, NJ, USA,IEEE, 11 septembre 2005 (2005-09-11), pages P1-P11, XP010933274 ISBN: 90-75815-09-3

## Description

L'invention concerne une alimentation à deux onduleurs en série pour actionneur électromécanique polyphasé.

### ARRIERE-PLAN DE L'INVENTION

Pour alimenter un actionneur électromécanique dont le moteur polyphasé comporte des enroulements formant des phases, on connaît des alimentations comportant deux onduleurs placés en série. Une telle architecture est décrite par exemple par le document FR-A-2 865 868. Chaque onduleur comporte une source de tension électrique aux bornes de laquelle s'étendent autant de bras qu'il y a d'enroulements à alimenter sur la machine. Chaque bras comporte un interrupteur commandé amont et un interrupteur commandé aval placés en série. Chaque enroulement comporte une première extrémité reliée à un bras d'un des onduleurs, en un point situé entre les interrupteurs commandés dudit bras, et une seconde extrémité reliée à un bras de l'autre onduleur, également en un point situé entre les interrupteurs commandés dudit bras.

Si sur l'un des bras de l'un des onduleurs, l'un des interrupteurs commandés vient à défaillir, qu'il reste ouvert ou fermé, il est connu de fermer certains interrupteurs de l'onduleur concernés et d'ouvrir les autres interrupteurs de façon à créer un point commun entre les extrémités des enroulements reliées à cet onduleur, ce point commun étant relié à l'une des bornes de la source de tension. Comme les deux sources de tension sont reliées à deux masses distinctes, le point commun est neutre du point de vue de l'autre onduleur, et il devient ainsi possible de commander la machine uniquement avec l'autre onduleur, et ainsi continuer à assurer un fonctionnement de la machine tournante avec un couple sensiblement constant.

Une telle architecture est donc résistante à la défaillance de l'un des interrupteurs commandés. Cependant, une telle architecture ne permet pas de continuer à faire fonctionner de façon correcte la machine tournante si l'extrémité de l'un des enroulements vient à se déconnecter du bras correspondant. Par exemple, sur une machine tournante triphasée dont l'un des enroulements est déconnecté, il resterait alors deux phases commandables. Si l'on continue à commander les interrupteurs des onduleurs comme si l'un des enroulements n'était pas déconnecté, on imposerait à la machine un couple fortement ondulé, très préjudiciable pour certaines applications, par exemple l'actionnement des dispositifs hypersustentateurs d'un aéronef, ou l'actionnement d'atterrisseurs.

On peut, comme auparavant, chercher à créer un point commun entre les deux phases valides, en ouvrant et fermant les interrupteurs de l'un des onduleurs de façon adéquate. Cependant, ces deux phases ainsi reliées par un point commun ne pourraient être commandées qu'avec des courants de somme nulle, qui devraient donc être déphasés d'un angle π, ce qui, combiné au déphasage spatial des phases de 2π/3, conduirait également à un couple fortement ondulé.

### OBJET DE L'INVENTION

L'invention a pour objet une amélioration de l'alimentation à deux onduleurs en série permettant de continuer à faire fonctionner l'actionneur de façon acceptable en cas de panne d'un des interrupteurs, mais également dans d'autres circonstances de panne.

### BREVE DESCRIPTION DE L'INVENTION

En vue de la réalisation de ce but, on propose une alimentation à deux onduleurs en série pour alimenter un actionneur électromécanique ayant au moins un moteur électrique comportant une pluralité d'enroulements formant des phases, chaque onduleur étant relié à une masse propre et comportant une source de tension électrique aux bornes de laquelle s'étendent autant de bras qu'il y a d'enroulements à alimenter, chaque bras comportant deux interrupteurs commandés placés en série entre lesquels est prévu un point de liaison à une extrémité d'un des enroulements. Selon l'invention, chaque onduleur comporte un bras supplémentaire comportant deux interrupteurs commandés, les deux bras supplémentaires étant reliés entre eux par un pont connecté à chaque bras supplémentaire en un point situé entre les interrupteurs.

Ainsi, en temps normal, les interrupteurs commandés des bras supplémentaires sont maintenus ouverts, de sorte que les bras supplémentaires et le pont n'ont aucune incidence sur le fonctionnement de l'actionneur. L'alimentation peut être reconfigurée pour faire face à la défaillance d'un interrupteur, de façon connue en soi.

Si l'un des enroulements venait à se déconnecter de l'un des bras, de sorte que la phase correspondante ne peut plus être commandée, on peut alimenter les phases valides avec des courants dont la somme n'est pas constamment nulle de façon à faire tourner le moteur sous un couple constant. Le courant résiduel provenant de la somme non nulle des courants des phases valides est drainé par le pont pour être renvoyé vers l'onduleur qui génère ces courants. La présence du pont et des bras supplémentaires permet donc un fonctionnement de l'actionneur à couple constant.

En particulier, dans le cas d'un moteur triphasé dont l'une des phases est déconnectée, on peut, en commandant les interrupteurs, créer un point commun entre les deux phases valides et le pont, ce qui permet un fonctionnement diphasé à couple constant de l'actionneur: en prévoyant des courants d'alimentation déphasés de π/3, alors que les phases sont spatialement déphasées d'un angle égal à 2π/3, on obtient un couple constant. Ainsi, on peut continuer à fonctionner à couple constant, même si l'une des phases est déconnectée.

### BREVE DESCRIPTION DES DESSINS

L'invention sera mieux comprise à la lumière de la description qui suit en référence aux figures des dessins annexés parmi lesquelles :
- la figure 1 est une vue schématique d'une alimentation à deux onduleurs en série pour un actionneur équipé d'un moteur électrique triphasé, selon un mode particulier de réalisation de l'invention ;
- la figure 2 est une vue analogue à la figure 1, illustrant une situation de panne dans laquelle l'un des interrupteurs est bloqué en position fermée ;
- la figure 3 est un schéma équivalent de celui de la figure 2, n'illustrant que les bras fonctionnels;
- la figure 4 est une vue analogue à la figure 1, illustrant une situation de panne dans laquelle l'un des enroulements du moteur est déconnecté de l'un des bras;
- la figure 5 est une vue analogue à la figure 4, illustrant une deuxième façon de gérer une déconnexion de phase;
- la figure 6 est un schéma équivalent de celui de la figure 5, n'illustrant que les bras fonctionnels.

### DESCRIPTION DETAILLEE DE L'INVENTION

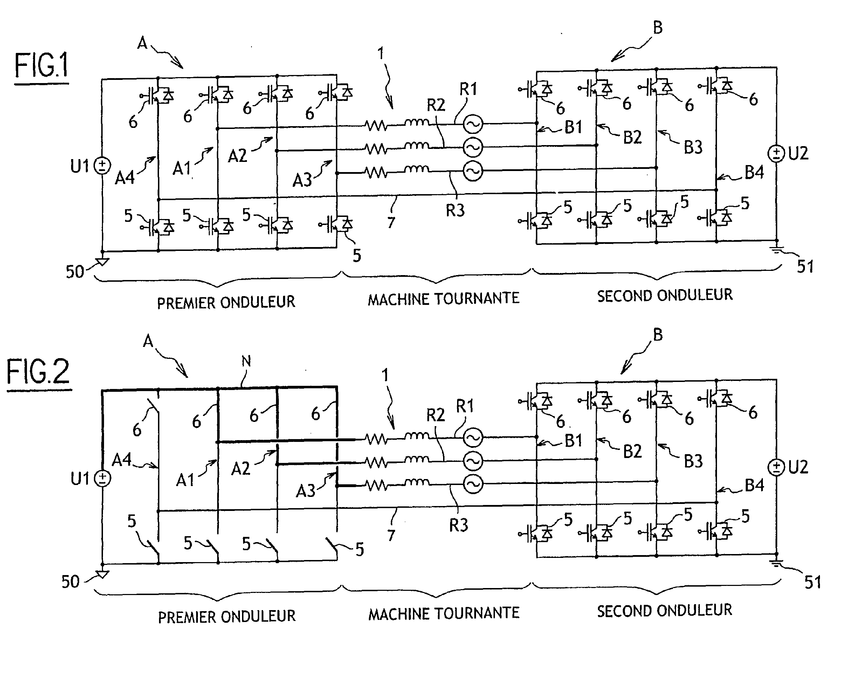

En référence à la figure 1, l'architecture d'alimentation est ici illustrée en application à un actionneur électromécanique pourvu d'un moteur électrique ou machine tournante triphasée 1 dont on aperçoit les trois enroulements R1,R2,R3, symbolisés chacun de façon classique à une résistance, une inductance et une force contre-électromotrice en série. Chacun des enroulements forme l'une des phases de la machine tournante, et est ici spatialement décalé de 2π/3 par rapport aux autres enroulements. L'alimentation de l'invention illustrée ici comporte un premier convertisseur ou onduleur A et un deuxième convertisseur ou onduleur B.

L'onduleur A comporte une première source de tension U1 dont une des bornes est reliée à une première masse 50. Aux bornes de la première source de tension U1 s'étendent trois bras A1,A2,A3 comportant chacun un interrupteur commandé amont 5 et un interrupteur commandé aval 6 placés en série sur le bras. Les interrupteurs commandés 5,6 équipant les onduleurs A,B sont par exemple des transistors bipolaires à jonction, des transistors à effet de champ Metal-Oxyde-semiconducteur, des thyristors commandés à l'ouverture, ou encore des transistors à grille isolée.

L'enroulement R1 (respectivement R2,R3) comporte une première extrémité reliée au bras A1 (respectivement A2, A3) en un point situé entre les interrupteurs commandés 5,6 correspondants.

De même, L'onduleur B comporte une seconde source de tension U2 ayant une borne reliée à une seconde masse 51, indépendante de la première masse 50. Aux bornes de la seconde source de tension U2 s'étendent trois bras B1, B2, B3 comportant chacun un interrupteur commandé amont 5 et un interrupteur commandé aval 6 placés en série sur le bras.

L'enroulement R1 (respectivement R2,R3) comporte une seconde extrémité reliée au bras B1 (respectivement B2,B3) en un point situé entre les interrupteurs commandés 5,6 correspondants.

Ainsi, chacun des enroulements R1,R2,R3 est relié en série à l'un des bras du premier onduleur A, et à l'un des bras du second onduleur B. De façon connue en soi, on commande les interrupteurs 5,6 de façon à faire circuler dans les enroulements R1,R2,R3 des courants déphasés de 2π/3 (dont la somme est constamment nulle). On impose ainsi à la machine tournante un couple constant. On peut commander la machine soit à l'aide du premier onduleur A, soit à l'aide du seconde onduleur B, soit à l'aide des deux onduleurs fonctionnant simultanément et de façon synchronisée.

Ce type d'alimentation peut se rencontrer sur un aéronef comportant deux circuits d'alimentation totalement indépendants, ayant des masses distinctes. Alternativement, et de façon connue en soi, il est possible de créer un deuxième circuit d'alimentation à partir d'un premier circuit d'alimentation au moyen d'un transformateur d'isolement, ou encore d'une alimentation à découpage isolée.

Selon l'invention, le premier onduleur A comporte en outre un bras supplémentaire A4, en tout point similaire aux bras A1,A2,A3. De même, le second onduleur B comporte un bras supplémentaire B4, en tout point similaire aux bras B1,B2,B3. Les bras supplémentaires A4,B4, sont reliés par un pont 7 connecté à chacun des bras supplémentaires A4,B4 en un point situé entre les interrupteurs commandés 5,6. En fonctionnement normal, les interrupteurs commandés 5,6 des bras supplémentaires A4,B4 sont maintenus ouverts, de sorte que ni les bras supplémentaires ni le pont 7 ne perturbent le fonctionnement de la machine tournante.

Dans les figures suivantes, sont illustrés différents modes de pannes et les façons de les traiter. Sur ces figures, les interrupteurs qui sont bloqués en position fermée ou qui sont maintenus volontairement dans l'état fermé sont représentés par une jonction électrique. Les interrupteurs qui sont bloqués en position ouverte ou qui sont maintenus volontairement dans l'état ouvert sont représentés par une portion de circuit ouvert.

Selon un premier mode de panne, il se peut que l'une des interrupteurs 5,6 de l'un des bras A1,A2,A3 du premier onduleur A vienne à défaillir. Par exemple, comme cela est illustré à la figure 2, on suppose que l'interrupteur aval 6 du bras A1 reste bloqué en position fermée par suite d'une défaillance.

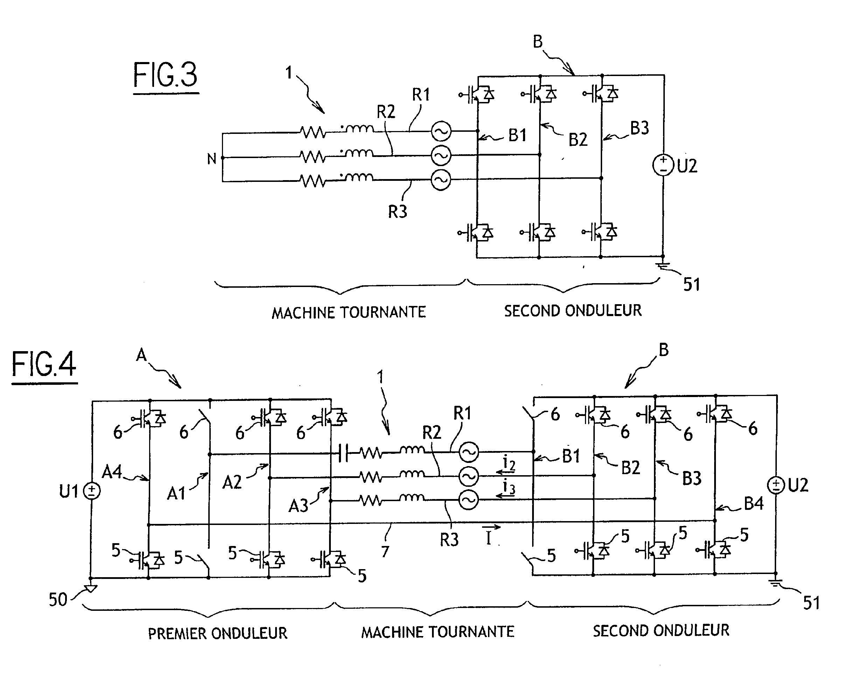

On peut bien sûr penser à neutraliser la phase correspondante en cessant de l'alimenter. Mais il est possible de continuer à utiliser les trois phases selon le procédé suivant : il suffit de maintenir fermés les interrupteurs aval 6 des bras A2 et A3, et d'ouvrir les interrupteurs amont 5 des bras A1,A2,A3. On crée ainsi un point commun N entre les extrémités des enroulements R1,R2,R3 du côté de l'onduleur A. Les liaisons réalisant ce point commun N sont surlignées en traits gras. Tout se passe comme si l'architecture d'alimentation avait la forme illustrée à la figure 3.

Les trois phases restent dès lors commandables en faisant circuler grâce aux interrupteurs commandés 5,6 du second onduleur B des courants déphasés de 2π/3 dans les enroulements R1, R2, R3. Le premier onduleur A est complètement neutralisé, et ne peut influencer la commande de la machine tournante par le second onduleur B. En particulier, le potentiel du point commun N dépend certes du potentiel imposé par la source de tension U1, mais ne peut être imposé par la source de tension U2. Du point de vue du second onduleur B, le point commun N a donc un potentiel flottant. Il est dès lors possible d'alimenter chacune des phases avec des courants déphasés de 2π/3, de sorte que leur somme soit constamment nulle. Combiné au déphasage spatial de zπ/3, le couple de la machine tournante ainsi alimentée reste constant et égal au couple nominal avant défaillance de l'interrupteur. Bien sûr, à tension U2 constante, la vitesse ainsi générée est divisée par deux. Pour retrouver la vitesse initiale, il convient d'augmenter en conséquence la tension U2.

Si l'un des interrupteurs aval 6 de l'un des bras A1,A2,A3 du premier onduleur A devait être bloqué en position ouverte, alors il suffit de maintenir ouverts les autres interrupteurs aval 6 desdits bras, et de maintenir fermés les interrupteurs amont 5 desdits bras. On recrée de la même façon un point commun entre les phases, de sorte que la machine tournante reste parfaitement commandable.

Les même remèdes s'appliquent lorsque l'un des interrupteurs amont 6 des bras A1,A2,A3 du premier onduleur A reste bloqué en position ouverte ou en position fermée. De la même façon, les mêmes remèdes s'appliquent si l'un des interrupteurs 5,6 des bras B1,B2,B3 du second onduleur B reste bloqué.

Dans ces cas de panne, les interrupteurs des bras supplémentaires A4 et B4 sont maintenus ouverts, de sorte que les bras supplémentaires ne sont pas utilisés pour résoudre lesdits cas de pannes.

Selon un autre cas de panne, l'un des enroulements peut être déconnecté de l'un des bras. Comme illustré à la figure 4, on suppose ici un cas de panne dans lequel l'enroulement R1 est déconnecté du bras A1 du premier onduleur A, comme symboliquement représenté. Il n'est dès lors plus possible d'alimenter la phase correspondante. Les stratégies précédentes ne trouvent donc pas à s'appliquer ici.

Par souci de sécurité, il convient tout d'abord d'isoler l'enroulement R1 déconnecté en ouvrant ici les interrupteurs 5,6 des bras A1 et B1 associés à cet enroulement, pour éviter tout risque de court-circuit entre les onduleurs par l'enroulement défaillant.

Selon une première stratégie, on commande les interrupteurs des bras A2, A3, B2, B3 et des bras supplémentaires A4,B4 pour faire circuler dans les enroulements valides R2 et R3 des courants i2, i3 déphasés de π/3. Dès lors, la somme des courants i2, i3 n'est pas constamment nulle. Cependant, le reliquat de courant I=i2+i3 est collecté par le pont 7 et peut s'échapper par ce dernier pour revenir vers l'onduleur qui a généré les courants i2 et i3. Un tel fonctionnement donne lieu à un couple constant. On a illustré à la figure 4 les courants i2 et i3 alimentant les phases valides (enroulements R2 et R3), ainsi que le courant I drainé par le pont 7. On peut démontrer que la machine tournante ainsi alimentée développe un couple constant, mais ce couple équivaut à 57% du couple qu'il aurait été possible de développer si l'un des enroulements ne s'était pas déconnecté.

Si l'on veut récupérer le couple nominal, il convient d'augmenter le courant d'alimentation en conséquence. Dans ce mode de fonctionnement, la vitesse de rotation de l'actionneur est égale à la vitesse de rotation nominale.

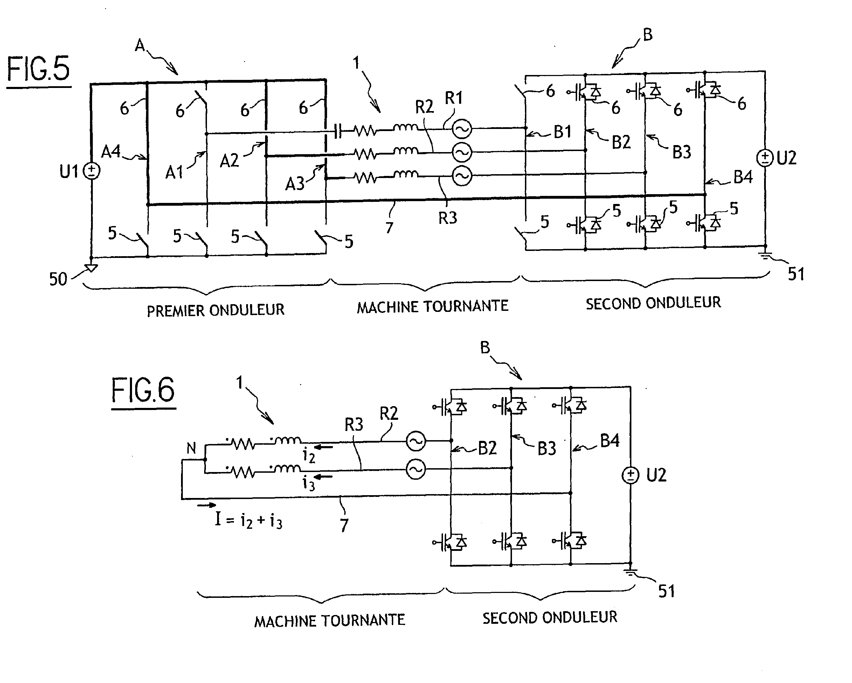

Selon une deuxième stratégie illustrée aux figures 5 et 6, on crée un point commun N entre les phases valides et le pont 7. A cet effet, on maintient fermés les interrupteurs aval 6 des bras restants A2,A3, ainsi que l'interrupteur aval 6 du bras supplémentaires A4. On maintient ouverts les interrupteurs amont 5 des bras A1, A2, A3, ainsi que l'interrupteur amont 5 du bras supplémentaire A4. On crée ainsi un point commun N entre les extrémités des enroulements R2,R3, et le pont 7. Le premier onduleur A est ainsi neutralisé.

Comme illustré à la figure 5, le pont 7 et les deux enroulements valides R2 et R3 ont maintenant une extrémité en commun. On commande les interrupteurs des bras B2,B3 et du bras supplémentaire B4 du second onduleur B pour faire circuler dans les enroulements valides R2 et R3 des courants i2, i3 déphasés de π/3. Dès lors, la somme des courants i2, i3 n'est pas constamment nulle. Cependant, le reliquat de courant I=i2+i3 est collecté au point commun N et peut s'échapper par le pont 7 pour revenir vers le second onduleur B. Ainsi, on peut commander la machine tournante de l'actionneur à l'aide d'un seul onduleur. Ici également, le couple développé est constant et est égal à 57% du couple nominal. Par contre, la vitesse de rotation est, à tension U2 constante, divisée par deux. Pour retrouver la vitesse de rotation nominale, il convient d'augmenter la tension U2 en conséquence.

Sans les bras supplémentaires A4,B4, et sans le pont 7, il aurait été impossible d'alimenter les enroulements valides R2 et R3 avec des courants déphasés de π/3. Il aurait fallu assurer une somme des courants i2 et i3 nulle, puisqu'il n'y aurait eu aucune possibilité de faire échapper le reliquat de courant. Il aurait donc fallu alimenter les enroulements avec des courants i2 et i3 déphasés de π, ce qui aurait conduit à un couple fortement ondulé, préjudiciable pour certaines applications.

La présence des bras supplémentaires A4,B4 reliés par un pont permet donc d'assurer un fonctionnement dégradé à couple constant même en cas de déconnexion d'un des enroulements.

L'architecture d'alimentation illustrée est donc capable de résister à la défaillance de l'un des interrupteurs des bras des onduleurs, ainsi qu'à la déconnexion de l'un des enroulements de la machine tournante.

L'invention n'est pas limitée à ce qui vient d'être décrit, mais bien au contraire englobe toute variante entrant dans le cadre défini par les revendications.

En particulier, l'invention n'est pas limitée à l'alimentation d'un actionneur électromécanique comportant une machine tournante triphasée, mais s'applique à une machine polyphasée pouvant présenter plus de trois phases.

En outre, bien que l'invention ait été décrite en référence à un actionneur électromécanique équipé d'un moteur électrique rotatif, appelé également machine tournante, l'invention s'applique également à l'alimentation d'actionneurs pourvus de moteurs linéaires.

## Revendications

1. Alimentation à deux onduleurs en série (A,B) pour alimenter un actionneur électromécanique ayant un moteur électrique comportant une pluralité d'enroulements (R1,R2,R3) formant des phases, chaque onduleur étant relié à une masse propre (50;51) et comportant une source de tension électrique (U1;U2) aux bornes de laquelle s'étendent autant de bras (A1,A2,A3;B1,B2,B3) qu'il y a d'enroulements à alimenter, chaque bras comportant deux interrupteurs commandés (5,6) placés en série entre lesquels est prévu un point de liaison à une extrémité d'un des enroulements; **caractérisé en ce que** chaque onduleur comporte un bras supplémentaire (A4;B4) comportant deux interrupteurs commandés, les deux bras supplémentaires étant reliés entre eux par un pont (7) connecté à chaque bras supplémentaire en un point situé entre les interrupteurs.

2. Ensemble composé de l'alimentation de la revendication 1, et de la machine tournante à laquelle l'alimentation est reliée.

3. Procédé d'utilisation de l'alimentation selon la revendication 1, comprenant l'étape de commander les interrupteurs de l'un des onduleurs de façon à créer un point commun (N) entre le pont (7) et au moins deux enroulements (R1;R2) au niveau de l'un des onduleurs.

## Claims

1. A power supply having two inverters (A, B) in series for powering an electromechanical actuator having an electric motor including a plurality of windings (R1, R2, R3) forming phases, each inverter being connected to its own ground (50; 51) and having a voltage source (U1; U2) having as many arms (A1, A2, A3; B1, B2, B3) connected thereacross as there are windings to be powered, each arm including two controlled switches (5, 6) connected in series, with a point therebetween being provided for connection to one end of one of the windings, wherein each inverter includes an additional arm (A4; B4) having two controlled switches, the two additional arms being interconnected by a bridge (7) that is connected to each of the additional arms at a point that is situated between the switches.

2. An assembly comprising the power supply of claim 1 together with the rotary machine to which the power supply is connected.

3. A method of using the power supply according to claim 1, and including the step of controlling the switches of one of the inverters in such a manner as to create a common point (N) between the bridge (7) and at least two windings (R1; R2) in one of the inverters.

## Patentansprüche

1. Stromversorgung mit zwei in Reihe geschalteten Wechselrichtern (A, B) zum Versorgen eines elektromechanischen Aktuators, der einen Elektromotor hat, der eine Vielzahl von Wicklungen (R1, R2, R3) umfasst, die Phasen bilden, wobei jeder Wechselrichter mit einer eigenen Masse (50; 51) verbunden ist und eine elektrische Spannungsquelle (U 1; U2) mit Anschlussklemmen umfasst, von denen sich so viele Zweige (A1, A2, A3; B1, B2, B3) erstrecken, wie zu versorgende Wicklungen vorhanden sind, wobei jeder Zweig zwei gesteuerte Schalter (5, 6) umfasst, die in Reihe angeordnet sind und zwischen denen ein Verbindungspunkt zur Verbindung mit einem Ende einer der Wicklungen vorgesehen ist, **dadurch gekennzeichnet, dass** jeder Wechselrichter einen zusätzlichen Zweig (A4; B4) umfasst, der zwei gesteuerte Schalter umfasst, wobei die beiden zusätzlichen Zweige miteinander über eine Brücke (7) verbunden sind, die an jeden zusätzlichen Zweig an einem Punkt angeschlossen ist, der sich zwischen den Schaltern befindet.

2. Anordnung bestehend aus der Stromversorgung nach Anspruch 1 und der umlaufenden Maschine, an die die Stromversorgung angeschlossen ist.

3. Verfahren zur Nutzung der Stromversorgung nach Anspruch 1, umfassend den Schritt des Steuerns der Schalter des einen der Wechselrichter derart, dass ein gemeinsamer Punkt (N) zwischen der Brücke (7) und mindestens zwei Wicklungen (R1; R2) im Bereich des einen der Wechselrichter geschaffen wird.
